Europäisches Patentamt

European Patent Office

Office européen des brevets

(19)

(11) EP 0 948 861 B1

(12) EUROPÄISCHE PATENTSCHRIFT

(45) Veröffentlichungstag und Bekanntmachung des Hinweises auf die Patenterteilung:
07.09.2005 Patentblatt 2005/36

(21) Anmeldenummer: 97951841.2

(22) Anmeldetag: 10.12.1997

(51) Int Cl.⁷: $H04M\ 15/00$, H04M 15/28, H04M 17/00

(86) Internationale Anmeldenummer:
PCT/DE1997/002870

(87) Internationale Veröffentlichungsnummer:
WO 1998/030012 (09.07.1998 Gazette 1998/27)

(54) **VERFAHREN UND SCHALTUNGSANORDNUNG ZUR TARIFIERUNG IN KOMMUNIKATIONSNETZEN**

METHOD AND SWITCHING DEVICE FOR BILLING IN TELECOMMUNICATIONS NETWORKS

PROCEDE ET CIRCUIT DE COMMUTATION POUR LA TARIFICATION DANS DES RESEAUX DE TELECOMMUNICATIONS

(84) Benannte Vertragsstaaten:
AT BE CH DE DK ES FI FR GB GR IE IT LI LU MC NL PT SE

(30) Priorität: 27.12.1996 DE 19654482

(43) Veröffentlichungstag der Anmeldung:
13.10.1999 Patentblatt 1999/41

(73) Patentinhaber: Deutsche Telekom AG
53113 Bonn (DE)

(72) Erfinder: SCHÖNBORN, Franz
D-53175 Bonn (DE)

(56) Entgegenhaltungen:
WO-A-95/11576          GB-A- 2 265 522
US-A- 5 359 642

**Beschreibung**

Die Erfindung betrifft ein Verfahren zur Kommunikations-Tarifierung in Kommunikationsnetzen nach dem Oberbegriff des Patentanspruches 1 sowie ein System bzw. eine Schaltungsanordnung nach dem Oberbegriff des Patentanspruches 6.

In den bekannten analogen Kommunikationsnetzen sind bereits Verfahren zur Kommunikations-Tarifierung bekannt. Diese Verfahren bieten die Möglichkeit der Verkehrssteuerung im Netz über den Preis. So wurden zum Beispiel sogenannte "Mondscheintarife" in den 80er Jahren eingesetzt, die mit einer starren, in wenige Tarifgruppen unterteilten Tarifstruktur arbeiten. Obwohl durch diese Verfahren grundsätzlich die Möglichkeit der Verkehrssteuerung über den Preis realisiert wurde, ist hierdurch nur eine sehr grobe Verkehrssteuerung möglich, weil die Einteilung in bestimmte zeitabhängige Preisgruppen nicht die tatsächliche Leitungsbelastung berücksichtigt. In neuerer Zeit sind Methoden bekanntgeworden, die eine Messung des Telefonierverhaltens von Einzelpersonen oder auch von Personengruppen in relativ nicht aufwendiger Weise ermöglichen. Es können zum Beispiel Kundenprofile zum Telefonierverhalten erstellt werden. Über sogenannte Call Behaviour Analysis-Verfahren lassen sich diese Profile meßtechnisch erfassen bzw. durch Auswertung von Meßergebnissen erstellen. In "telekom/praxis", Heft 9/96, Band 73 ist von John Taylor unter dem Titel "Call Behaviour Analysis" auf den Seiten 39 und 40 ein sogenanntes Call Behaviour Analysis (CBA) System der Firma Hewlett-Packard beschrieben.

In der GB-A-2 265 522 ist ein System zur Registrierung von Handtelefonen in Mobilfunksystemen über eine Luftschnittstelle angegeben. Das System besitzt eine Vermittlungsstelle, die Teil eines PSTN-Public Switched Telephone Network ist, außerdem Endgeräte eines Kommunikationsnetzes und ist über Verbindungen, Leitungen mit einem Rechner für Tarifeinheiten verbunden. Dieses System soll drahtlos Telefone befähigen, vorausbezahlte Kommunikationsver-bindungen zu handhaben. Die relevanten Daten werden zu diesem Zweck mit den Registrierungsdaten zum Handgerät übertragen. Zur Preisbildung mißt das_System die verbrauchten Tarifeinheiten und subtrahiert diese von dem gespeicherten Kreditbetrag. Damit geht auch dieses System von herkömmlichen Tarifeinheiten aus und berücksichtigt nicht die durch die Digitaltechnik gegebenen Möglichkeiten der volumenbezogenen Messung übertragener Informationsmengen. Außerdem werden keine Verfahren zur Pauschalierung der Nutzungsentgelte angegeben.

Bei dem System ist jedes Endgerät über Leitungen mit einem Kommunikationszähler ausgerüstet, dessen Ablesung entweder automatisch mit Telemetriemitteln oder nach Aufforderung vom Kunden erfolgt.

Der Erfindung liegt deshalb die Aufgabe zugrunde, ein Verfahren und ein System bzw. eine Schaltungsanordnung zur verwaltungsoptimierten Kommunikations-Tarifierung in analogen und digitalisierten Kommunikationsnetzen zu schaffen, das/die Informationen über das Kommunikationsverhalten berücksichtigt bzw. berücksichtigen und individuelle nutzerbezogene mittlere Verbindungszeiten pro Zeiteinheit bzw. übertragene Datenmengen pro Zeiteinheit ermöglichen und die Berechnung eines Pauschalbetrages für den Einzelkunden bzw. für Kundengruppen, der Grundlage für eine Abrechnung während eines längeren Zeitraumes ist, zu realisieren.

Die erfindungsgemäße Lösung für das Verfahren ist im Kennzeichen des Patentanspruches 1 charakterisiert und die erfindungsgemäße Lösung für das System bzw. die Schaltungsanordnung ist im Kennzeichen des Patentanspruches 6 charakterisiert.

Weitere Lösungen der Aufgabe bzw. Ausgestaltungen der Erfindung sind in den Kennzeichen der Patentansprüche 2 bis 5 für das Verfahren und 7 bis 10 für die Schaltungsanordnung beschrieben.

Gemäß dem Verfahren werden die tatsächlichen Kommunikationsdatenentgelte laufend erfaßt. Zusätzlich werden generell alle Gesprächsdaten dokumentiert und für eine bestimmte Zeit gespeichert, bzw. archiviert. Die Grundlage für das Verfahren für die verwaltungsoptimierte Kommunikations-Tarifierung ist das durchschnittliche individuelle Entgeltaufkommen pro Zeiteinheit eines jeden einzelnen Telekommunikationskunden. Dieses durchschnittliche Entgelt wird als individueller Pauschalbetrag festgesetzt und es wird zum Beispiel jährlich ein softwaregestützter Abgleich mit den tatsächlich aufgekommenen Entgelten durchgeführt und automatisch ein Kontenausgleich vorgenommen. Der Pauschalbetrag wird zum Beispiel jährlich automatisch auf seine Richtigkeit geprüft und eventuell den aktuellen Bedingungen vom System her angepaßt. Mit dem hier beschriebenen Verfahren und dem beschriebenen System lassen sich erhebliche Einsparungen an Material und Verwaltungsaufwand erzielen bei gleichzeitiger Verbesserung des Service für den Kunden durch in einfacher Weise nachvollziehbare Rechnungslegung. Aufgrund der vorhandenen langfristigen oder in einfacher Weise beschaffbaren Informationen über das Kommunikationsverhalten sowohl von Einzelkunden als auch von Kundengruppen, lassen sich individuelle nutzerbezogene mittlere Verbindungszeiten pro Zeiteinheit ableiten. In Digitalnetzen bietet sich alternativ zur Ermittlung der Verbindungsdauer ganz generell die Messung der pro Zeiteinheit übertragenen Datenmengen (zum Beispiel in Megabyte pro Tag oder ähnliches) an. Damit steht eine exakte volumenbezogene Größe zur Messung der Netzbenutzung durch den Kunden zur Verfügung. Die individuellen Volumenwerte stehen direkt am Ausgang des jeweiligen A/D-Wandlers bei Einzelgeräten zur Verfügung. Die Messung des Telefonierverhaltens von Einzelpersonen und auch von Personengruppen ermöglicht es, Kundenprofile zum Telefonierverhalten zu erstellen und über sogenannte Telephone-Behaviour-Analysis-Verfahren lassen sich diese Profile meßtechnisch erfassen bzw. durch Auswertung von Meßergebnissen erstellen, wie zum Beispiel in Heft 9/96, Band 73 der "telekom/praxis" auf den Seiten 39 und 40 von John Taylor beschrieben ist. Aus diesen individuellen Kommunikationsprofilen werden mittlere individuelle Kostenprofile mit Hilfe eines Rechners automatisch ermittelt, die ihrerseits in pauschalierte Rechnungsbeträge im zweimonatlichen, monatlichen oder auch vierteljährlichen Rythmus mit turnusgemäßem Feinabgleich auf die exakt angefallenen Entgelte umgesetzt werden. Die individuellen Nutzdaten werden systemintern gespeichert und als Basis für den Feinabgleich und zur Festsetzung der langfristigen pauschalierten Entgeltmittelwerte herangezogen. Diese pauschalierten Mittelwerte sind den Nutzern von Kommunikationsdienstleistungen, zum Beispiel für den Zeitraum eines Jahres, als zum Beispiel zweimonatlicher Rechnungsbetrag in Rechnung zu stellen. Da die Differenzbeträge aus dem Feinabgleich Guthaben oder Kredite sein können, lassen sich diese direkt mit den zukünftigen Nutzungsentgelten bzw. mit den Krediten verrechnen. Bei Neukunden wird zur Verifikation der Anfangspauschalierung für einen bestimmten Einschwingzeitraum der Feinabgleich durchgeführt. Bleibt der sich ergebende Differenzbetrag innerhalb eines Zielsektors von x Prozent vom exakten Wert des Nutzungsentgeltes, wird die Pauschalierung als zutreffend eingestuft und langfristig, zum Beispiel für ein Jahr, festgesetzt. Aus dieser Pauschalabrechnung ergibt sich, daß überhaupt keine Rechnungen mehr zu verschicken sind, was zu einer enormen Einsparung für Serviceanbieter, wie für die Deutsche Telekom AG mit mehr als 40 Millionen Rechnungen für Telekommunikationsdienstleistungen monatlich, führt. Als einzige exakte Rechnung wird die zum Feinabgleich am Ende eines Pauschalierungszeitraumes herangezogene Berechnung der Differenz zwischen Ist und Soll in Form einer Jahresabrechnung erstellt.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben.

In der Beschreibung, in den Patentansprüchen, der Zusammenfassung und in der Zeichnung werden die in der hinten angeführten Liste der Bezugszeichen verwendeten Begriffe und zugeordnete Bezugszeichen verwendet.

In der Zeichnung bedeuten:

Fig. 1 ein Diagramm zur Darstellung der Beziehung zwischen Nutzungsentgelt, Nutzungspauschale und exakten Verbrauchswerten;

Fig. 2 ein Diagramm, das die Überschreiturig des Pauschalpreiskorridors durch die tatsächlichen monatlichen Nutzungsentgelte darstellt;

Fig. 3 ein Diagramm, das die Überschreitung des Pauschalpreiskorridors durch den mit dem jeweiligen Wert des Vormonats verrechneten Kontostand darstellt;

Fig. 4 ein Zeigerdiagramm zur Darstellung der Zusammenhänge zwischen der monatlichen Pauschalzahlung, des tatsächlichen Nutzungsentgeltes und des tatsächlichen monatlichen Verbrauches;

Fig. 5 ein Diagramm zur Darstellung der Prozeßbreite;

Fig. 6 ein Diagramm zur Darstellung der Trendabweichungen;

Fig. 7 ein Prinzipschaltbild und

Fig. 8 ein Prinzipschaltbild eines Pauschalierungsrechners mit Operatorterminal und Drucker.

Mit dem nachfolgend beschriebenen Verfahren lassen sich erhebliche Einsparungen an Material und Verwaltungsaufwand erzielen bei gleichzeitiger Verbesserung des Service für den Kunden durch in einfacher Weise nachvollziehbare Rechnungslegung für den tatsächlichen Verbrauch des jeweiligen Kunden.

Im nachfolgenden wird das Funktionsprinzip der automatisierten verwaltungsoptimierten Kommunikations-Tarifierung VKT beschrieben.

1. Aufgrund von vorhandenen langfristigen oder in einfacher Weise beschaffbaren Informationen über das Kommunikationsverhalten sowohl von Einzelkunden als auch von Kundengruppen lassen sich individuelle nutzerbezogene, mittlere Verbindungszeiten pro Zeiteinheit (Verbindungsdauer, Tag, Woche, Monat, Jahr) ableiten.

2. In digitalisierten Netzen bietet sich alternativ zur Ermittlung der Verbindungsdauer die Messung der pro Zeiteinheit übertragenen Datenmengen an, zum Beispiel in Megabyte pro Tag oder ähnliches. Damit steht eine exakte volumenbezogene Größe zur Messung der Netzbenutzung durch den Kunden zur Verfügung. Die individuellen Volumenwerte stehen direkt am Ausgang eines jeweiligen A/D-Wandlers bei End-/Einzelgeräten zur Verfügung.

3. Das Telefonierverhalten von Einzelpersonen oder Personengruppen wird gemessen, um Kundenprofile zum Telefonierverhalten zu erstellen. Dies wird zum Beispiel über sogenannte bereits angegebene Telephone-Behaviour-Analysis-Verfahren meßtechnisch durchgeführt und zwar sowohl die Erfassung als auch die Auswertung.

4. Die Individualität erstreckt sich sowohl auf Nutzergruppen, die wiederum in Untergruppen unterteilt werden können als auch auf Privatpersonen, die zum Beispiel in Wenigsprecher, Normalverbraucher und Vielsprecher eingeteilt werden.

5. Aus diesen individuellen Kommunikationsprofilen lassen sich mittlere individuelle Kostenprofile ermitteln, die sich in pauschalierte Rechnungsbeträge in viertel jährlichem, zweimonatlichem bzw. monatlichem Rythmus mit turnusgemäßem Feinabgleich auf die exakt angefallenen Entgelte umsetzen lassen.

6. Die individuellen Nutzungsdaten werden systemintern gespeichert und bearbeitet. Sie werden als Basis für den turnusgemäßen Feinabgleich und zur Festsetzung der langfristigen pauschalierten Entgeltmittelwerte in einem Pauschalierungsrechner 1 herangezogen. Diese pauschalierten Mittelwerte sind den Nutzern von Kommunikationsdienstleistungen als zum Beispiel zweimonatlicher Rechnungsbetrag in Rechnung zu stellen.

7. Der Feinabgleich wird zum Beispiel am Ende eines jeden Vertragsjahres des Kunden durchgeführt. Damit ergibt sich nach jeweils einem Jahr Mitgliedschaft die Möglichkeit der Anpassung der Pauschalbeträge an die aktuellen individuellen mittleren Kostenprofile der Teilnehmer.

8. Differenzbeträge aus dem Feinabgleich sind entweder Guthaben oder Kredite. Die Guthaben lassen sich mit Einverständnis des Rechnungsempfängers direkt mit den künftigen Nutzungsentgelten verrechnen und Kredite werden sofort ausgeglichen.

9. Neukunden werden anhand der von den Kunden zu - erfragenden Kundendaten einer entsprechenden Nutzerklasse zugeordnet und so anfangs-pauschaliert.

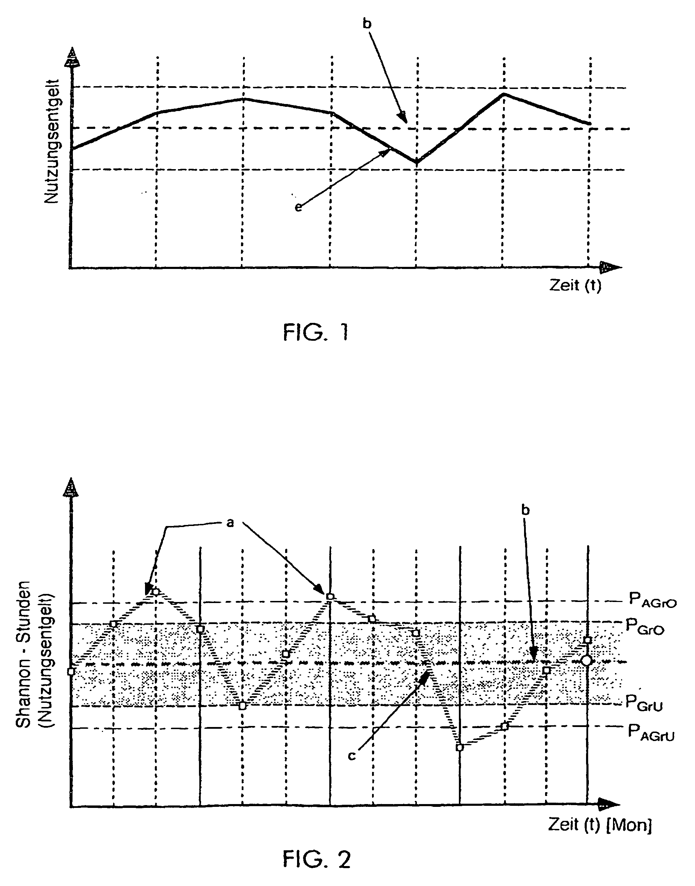

10. Bei Neukunden wird zur Verifikation der Anfangspauschalierung für einen bestimmten Einschwingzeitraum, zum Beispiel zweimonatlich, der Feinabgleich durchgeführt. Bleibt der sich ergebende Differenzbetrag innerhalb eines Zielkorridores von x Prozent vom exakten Wert des Nutzungsentgeltes, kann die Pauschalierung als zutreffend eingestuft werden und langfristig, zum Beispiel für ein Jahr, festgesetzt werden. Die Zusammenhänge zwischen der Nutzungspauschale und den exakten Verbrauchswerten sind in dem Diagramm nach Fig. 1 dargestellt.

11. Bei Pauschalabrechnung besteht keine Notwendigkeit mehr, überhaupt noch Rechnungen zu verschicken. Als einzige exakte Rechnung wird die zum Feinabgleich am Ende des Pauschalierungszeitraumes, zum Beispiel ein Jahr, herangezogene Berechnung der Differenz zwischen Ist und Soll, das heißt zwischen Pauschalbeträgen und exakten Nutzungsentgelten, in Form einer Jahresabrechnung erstellt.

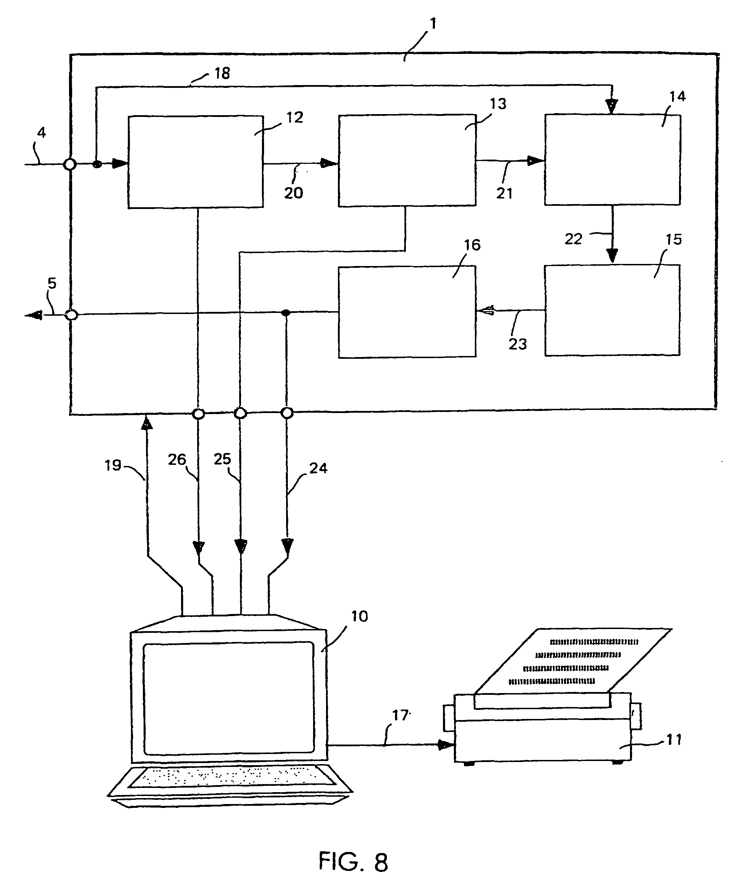

In Fig. 2 ist ein Diagramm dargestellt, das die Tatsache darstellt, daß bei einer Trendbildung sich die Abweichungen im allgemeinen sehr schnell zu Beträgen summieren, die eine Alarmgrenze überschreiten. Wie in Fig. 2 dargestellt und an der Mittelwertkurve zu erkennen ist, kann jedoch auch nach dem Überschreiten einer Alarmgrenze eine Rückkehr in den Pauschalkorridor erfolgen. In diesem Falle wäre ein Eingreifen des Systemes zur Festsetzung eines neuen Pauschalwertes oder Pauschalpreises verfrüht. Dies läßt sich weitgehend dadurch entschärfen, daß zum Beispiel mindestens zwei aufeinanderfolgende Überschreitungen von dem oberen Prozeßalarmgrenzwert PAGrO oder dem unteren Prozeßalarmgrenzwert PAGrU auftreten müssen, um die Neufestsetzung des Pauschalpreises im Pauschalierungsrechner 1 nach Fig. 8 einzuleiten. So ist zum Beispiel gezeigt, daß in den Urlaubsmonaten normalerweise eine Unterschreitung eintritt und zu bestimmten Zeiten eine Überschreitung des Korridores. Außerdem ist aus der Fig. 2 klar zu ersehen, daß zu bestimmten Zeiten ein Prozeßalarm, gezeigt bei a, auftreten kann. Der mit b bezeichnete Pfeil zeigt die Nutzungspauschale und der mit c gezeigte Pfeil den mittleren Monatsverbrauch.

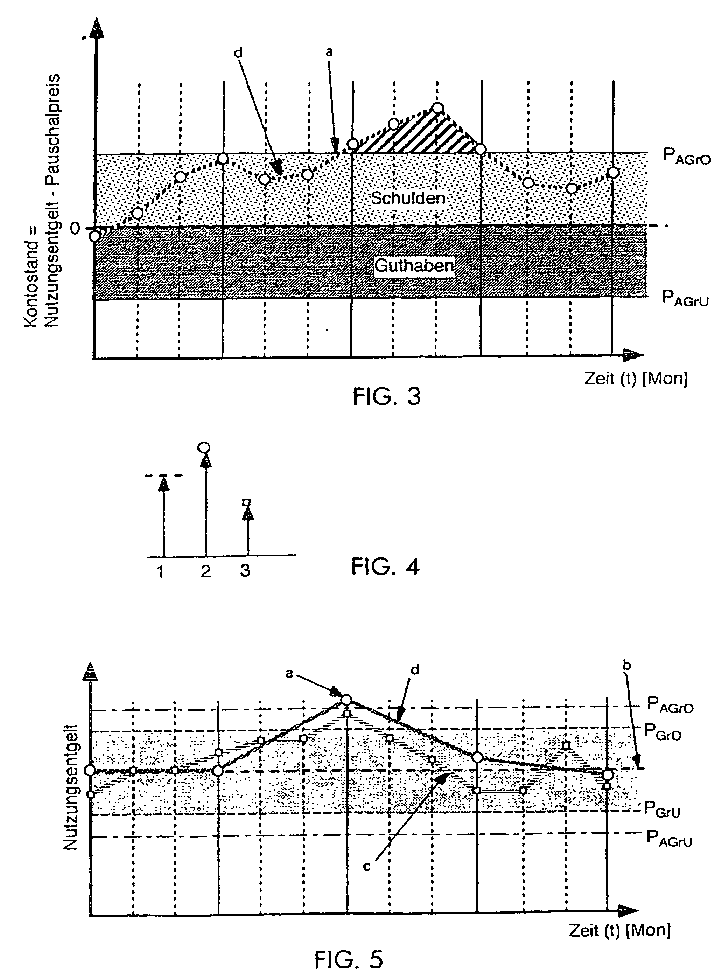

In Fig. 3 ist ein weiteres Diagramm dargestellt, das die Überschreitung des Pauschalpreiskorridores durch den mit dem jeweiligen Wert des Vormonats verrechneten Kontostandes zeigt. Der mit a gekennzeichnete Pfeil zeigt wieder den Punkt für den Prozeßalarm, der mit d bezeichnete Pfeil die Differenz zum Pauschalbetrag. Der jeweilige Kontostand ist gleich Nutzungsentgelt minus Pauschalpreis. Durch die Auswertung verschiedener nichtkontinuierlicher Überschreitungen der Pauschalalarmgrenze läßt sich die Flexibilität noch erhöhen. Dies kann zum Beispiel dadurch erreicht werden, daß die Überschreitungshöhe und der Zeitpunkt der Überschreitung miteinander in Beziehung gesetzt wird. Es ist in jedem Fall sinnvoll, die Überschreitungen der oberen und unteren Prozeßalarmgrenzwerte PAGrO und PAGrU innerhalb eines Bewertungszeitraumes oder zur langfristigen Stabilisierung des Pauschalpreises auch darüberhinaus, gegeneinander aufzurechnen. Dies ist wichtig, um zum Beispiel die Urlaubszeit und die Monate besonderer Kommunikationsaktivitäten ohne Alarmauslösung durchlaufen zu können.

In Fig. 4 ist der Zusammenhang zwischen der monatlichen Pauschalzahlung, dem tatsächlichen Nutzungsentgelt und dem tatsächlichen monatlichen Verbrauch dargestellt. Der Pfeil 1 zeigt die monatliche Pauschal zahlung; der Pfeil 2 die monatliche Differenz zwischen tatsächlichem Nutzungsentgelt und monatlicher Pauschalzahlung und der Pfeil 3 den tatsächlichen monatlichen Verbrauch in Shannon-Stunden, der den tatsächlich aufkommenden Nutzungsentgelten entspricht.

Es muß nocheinmal betont werden, daß nach dem erfindungsgemäßen Verfahren alle tatsächlichen Kommunikationsentgelte laufend erfaßt werden. Zusätzlich sind jedoch generell alle Gesprächsdaten mit zu dokumentieren und für eine bestimmte Zeit abzuspeichern. Grundlage der hier beschriebenen automatisierten verwaltungsoptimierten Kommunikations-Tarifierung VKT ist das durchschnittliche individuelle Entgeltaufkommen pro Zeiteinheit eines jeden einzelnen Telekommunikationskunden. Dieses durchschnittliche Entgelt wird als individueller Pauschalbetrag festgesetzt. Jährlich wird ein Abgleich mit den tatsächlich aufkommenden Entgelten durchgeführt und ein Kontoausgleich vorgenommen. Der Pauschalbetrag wird jährlich auf seine Richtigkeit überprüft und eventuell den aktuellen Bedingungen angepaßt. Es können selbstverständlich auch andere Zeiträume eingeführt werden. Es wird hier eine Kommunikations-Verbrauchseinheit definiert, nach der die übertragene Datenmenge als Maß für "verbrauchte Information" in Form von Kommunikationseinheiten gemessen und tarifiert werden kann. Als VerbrauchsmaBstab wird die Einheit Megabyte-Stunde gemesen in Shannon (SHh) vorgeschlagen.

Die Schwankungen des monatlichen Kommunikationsverbrauches, bereinigt um den höchsten und den niedrigsten Wert, bilden im Zeitverlauf des jeweils verwendeten Zeitraumes die Prozeßbreite, in der sich das tatsächliche Entgeltaufkommen bewegen darf. Zur Feststellung der Prozeßbreite wird eine Monats-Mittelwertkurve aus den gemessenen Tageswerten berechnet, wie im Diagramm nach Fig. 5 dargestellt. Aus diesen Monatsmittelwerten wird der idealisierte Mittelwert als Pauschalwert für jeweils ein Jahr ermittelt. Der Pfeil a im Diagramm nach Fig. 5 zeigt wiederum auf den Prozeßalarmpunkt, der Pfeil b auf die gestrichelt dargestellte Nutzungspauschale, der Pfeil c zeigt auf die Kurve des mittleren Monatsverbrauches und der Pfeil d auf die Kurve des mittleren Vierteljahresverbrauches. Jeder Meßpunkt (°) gibt einen Vierteljahres-Mittelwert an, gebildet aus den Meßpunkten der Monatsmittelwerte (□). Der Vierteljahres-Mittelwert ist das Bemessungskriterium für die Ermittlung der Höhe der individuellen Pauschalbeträge. Die Schwankungsbreite der Monatsmittelwertkurve bildet die oberen und die unteren Prozeßgrenzwerte PGrO und PGrU, das heißt also die größten Abweichungen vom Pauschalwert in Richtung höherer bzw. niedriger Informationsverbrauch. Ein aus dem individuellen Kommunikationsprofil abzuleitender prozentualer Zuschlag zu diesen Prozeßgrenzwerten bilden die Prozeßalarmgrenzwerte a. Bei Überschreiten dieser Grenzwerte wird ein Systemalarm ausgelöst, der andeutet, daß zu diesem Zeitpunkt der Pauschalbetrag nicht mehr mit dem Jahresverbrauch in Einklang zu bringen ist. Die Prozeßgrenzwerte PGrO und FGrU geben die Spannbreite an, die vom Pauschalierungsalgorithmus abgedeckt wird. Durch Wahl der Parameter in diesem Algorithmus ist die Möglichkeit einer Flexibilität gegeben. PAGrO und PAGrU sind die Prozeßalarmgrenzwerte, deren Überschreitung eine Alarmmeldung beim Prozeßcontrolling bewirkt. Abweichungen dieser Höhe sind bei ansonsten normalem Prozeßverlauf nicht nur innerhalb der Jahresfrist - bis zur nächsten Pauschalierungsberechnung auszugleichen. Der Pauschalierungsrechner 1 vergleicht laufend entweder auf der Basis für diesen Zweck zu berechnender Wochenmittelwerte oder unter Verwendung der Monatsmittelwerte, ob die eventuell vorhandenen Abweichungen sich in einer bestimmten Spannbreite bewegen. Werden die Abweichungen zu groß, zum Beispiel durch Teilnahme und intensive Nutzung von Online-Diensten, so gibt der Pauschalierungsrechner 1 ein Indikationsalarmsignal heraus. Dies zeigt an, daß bei dem aktuellen Trend, errechnet aus den teilnehmerindividuellen Daten, zum Beispiel der letzten drei Monate, der neue Pauschalpreis von dem bisherigen um mehr als zum Beispiel 15 Prozent abweicht. Der Indikationsalarm wird benutzt, um zum Beispiel ein Beratungsgespräch mit dem betroffenen Kunden anzuberaumen.

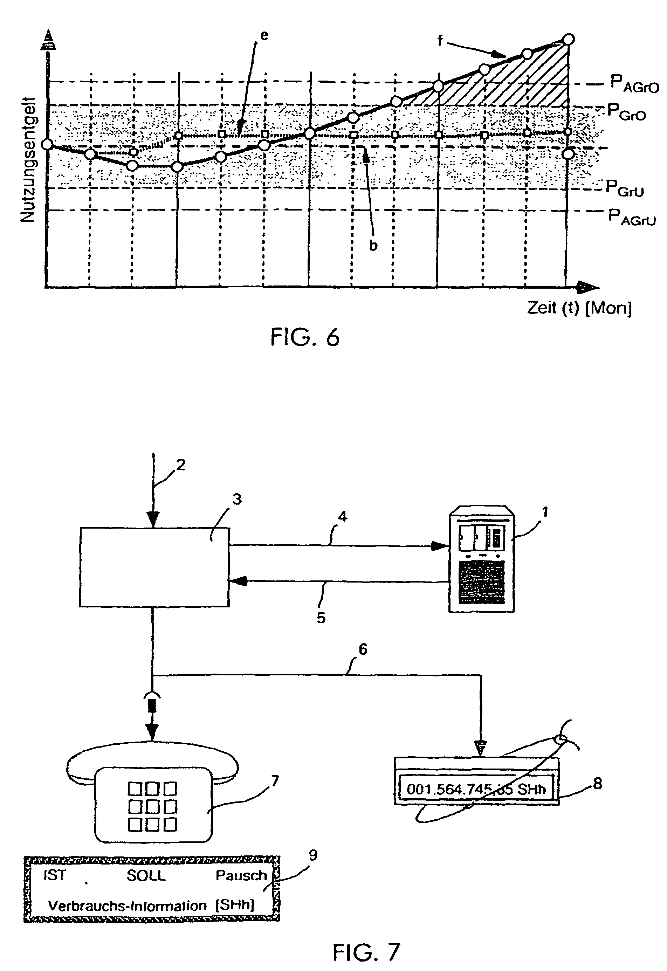

Das in Fig. 6 gezeigte Diagramm zeigt die Trendabweichungen in folgender Weise: Trotz nur geringer Abweichungen (□) vom Prozeßmittelwert (Idealwert ist Pauschalabgeltung) zeigt die Trendauswertung (°), daß der Prozeß mit der gewählten Pauschalierung nicht in der vorgegebenen Prozeßbreite zu halten ist. Die aufkommenden Kosten lassen sich durch Pauschalierung nicht mehr ausgleichen. Im umgekehrten Falle, nämlich einer geringen Nutzung, läßt sich das kumulierende Guthaben auch nicht mehr ausgleichen, das heißt der Prozeß muß neu pauschaliert werden. In Fig. 6 zeigt der Pfeil b auf den Verlauf der Nutzungspauschale, der Pfeil e auf die Kurve für die exakten verbrauchswerte und der Pfeil f auf die Kurve der Differenz zur Pauschalabgeltung.

In Fig. 7 ist ein Prinzipschaltbild eines Systemes, das nach dem erfindungsgemäßen Verfahren arbeitet, dargestellt. Das System nach Fig. 7 besteht im wesentlichen aus dem Pauschalierungsrechner 1, einer Vermittlungsstelle 3, einem Endgerät 7 mit Display 9 und einem Zähler 8 für den Kommunikationsverbrauch, zum Beispiel einem Shannon-Zähler. Die Vermittlungsstelle 3 ist über Leitungen 6 sowohl mit dem Endgerät 7 als auch mit dem Zähler 8 verbunden. Sie bekommt über die Leitung 2 die ankommenden Informationen. Über die Verbindungen, Leitungen 4 oder dergleichen gelangen die Entgeltinformationen zum angeschlossenen Pauschalierungsrechner 1 und über die Verbindungen, Leitungen 5 oder dergleichen die Pauschalisierungsinformation vom Pauschalisierungsrechner 1 zur Vermittlungsstelle 3. In der für den jeweiligen Kunden zuständigen Vermittlungsstelle 3 werden die fortlaufend gemessenen Gebühreninformationen dem Pauschalierungsrechner 1 zugeführt, der aus diesen Daten zu einem bestimmten individuellen Termin den neuen Pauschalpreis für das nächste kundenindividuelle Abrechnungsjahr ermittelt. Alle abrechnungsrelevanten Daten, wie zum Beispiel Ist, Soll oder Pauschbetrag, werden an das Endgerät 7 weitergegeben und können dort je nach Leistungsmerkmal automatisch oder per Hand protokolliert werden. Das Display 9 zeigt die verbrauchte Informationsmenge in der Maßeinheit Shannon-Stunden SHh an. Eine Shannon-Stunde ist gleich die übertragene Informationsmenge unter Berücksichtigung der Übertragungskapazität des Kanales und der tatsächlichen Übertragungsgeschwindigkeit auf dem Kanal. Mit jedem Endgerät 7 wird ein Kommunikationszähler 8 verbunden. Dieser Kommunikationszähler ist im allgemeinen ein Shannon-Zähler, der als verplombtes oder in anderer Weise gegen Manipulation geschütztes Gerät beim Kunden installiert wird. Das Ablesen erfolgt entweder automatisch mit Mitteln der Telemetrie oder nach Aufforderung mit Doppelkarte vom Kunden, der die Zählkarte mit seiner eingetragenen abgelesenen Information an seinen Kommunikationslieferanten zurückschickt. Der Pauschalierungsrechner 1 verarbeitet die Information über verbrauchte Informationsmengen in dreierlei Hinsicht: Er vergleicht die aktuellen Werte mit den festgelegten Prozeßbreiten und generiert bei Überschreitung der Prozeßalarmgrenze den Prozeßalarm; er prüft die aktuellen Verbrauchswerte auf eventuelle Trendbildung und generiert bei trendmäßiger Grenzwertüberschreitung einen Indikationsalarm; er speichert die Entgeltinformationen, das Prozeßverhalten und die Alarme zu Dokumentationszwecken. Schließlich errechnet der Pauschalierungsrechner 1 zu vorbestimmten Zeitpunkten oder nach besonderer Notwendigkeit einen neuen Pauschalwert, der dem veränderten Kommunikationsverhalten eines jeweils betreffenden Kunden besser entspricht.

In Fig. 8 ist ein Prinzipschaltbild eines Pauschalierungsrechners 1 mit seinen Außenverbindungen dargestellt. Zur Kontrolle des Pauschalierungsrechners 1 dient in diesem Beispiel ein Operatorterminal 10, das über Leitungen 19 und 24 bis 26 mit dem Pauschalierungsrechner 1 verbunden ist. Außerdem ist das Operatorterminal 10 über eine Leitung 17 mit einem Protokolldrucker 11 verbunden. Auf der Leitung 19 gelangen die Informationen zur Parametereinstellung an den Pauschalierungsrechner 1, auf der Leitung 26 gelangen die Signale für den Prozeßalarm vom Pauschalierungsrechner 1 zum Operatorterminal 10, auf der Leitung 25 gelangen die Signale für den Indikatoralarm vom Pauschalierungsrechner 1 zum Operatorterminal 10 und auf der Leitung 24 gelangt die Pauschalpreisanzeigeinformation vom Pauschalierungsrechner ebenfalls auf das Operatorterminal 10. Die Pauschpreisinformation gelangt außerdem vom Pauschalierungsrechner 1 über die Verbindung, Leitung 5 oder dergleichen an die zugehörige Vermittlungsstelle, wie in Fig. 7 dargestellt ist. Über eine Verbindung, Leitung 4 oder dergleichen bekommt der Pauschalierungsrechner 1 von der genannten Vermittlungsstelle die Entgeltinformationen, die einmal direkt über eine Leitung 18 in den Systemspeicher 14 gegeben werden und zum anderen auf eine Schaltung 12 zum Vergleich der Prozeßbreite. Die Schaltung 12 gibt über eine Leitung 20 ihre Ausgangssignale an eine Schaltung 13 zur Prüfung der Trendbildung, deren Ausgang über eine Leitung 21 mit dem Systemspeicher 14 verbunden ist und die außerdem über die Leitung 25 einen Indikatoralarm an das Operatorterminal 10 zum gegebenen Zeitpunkt abgibt. Die Schaltung 12 gibt auf der Leitung 26 gegebenenfalls das Signal für den Prozeßalarm an das Operatorterminal 10. Der Systemspeicher 14 ist über eine Leitung 22 mit einer Vergleichsschaltung 15 verbunden, die den Vergleich Ist zu pauschal Minus Soll durchführt. Der Ausgang der Schaltung 15 ist über eine Leitung 23 mit einer Schaltung 16 zur Berechnung des neuen Pauschalpreises verbunden, der über die Leitung 5 nach außen gegeben wird und über die Leitung 24 auf das Operatorterminal 10.

Alle an den Pauschalierungsrechner 1 gelieferten Verbrauchsdaten sowie alle von diesem Rechner an das Kundenendgerät (Endgerät 7 in Fig. 7) gelieferten Daten können vom Operatorterminal 10 abgerufen und zur Anzeige gebracht werden. Der angeschlossene Drucker 11 kann die Daten protokollarisch ausdrucken. Diese Systemkontrolle läßt sich sowohl bedienergesteuert als auch automatisch, das heißt systemgesteuert, durchführen. Es soll noch erwähnt sein, daß die Schaltungen 12 bis 16 des Pauschalierungsrechners 1 auch als Systemsoftware in einem Einprozessor- oder Mehrprozessorsystem realisiert werden können.

Im nachfolgenden werden noch Beispiele für die Berechnung des Pauschalpreises für Neukunden mit Parametervariationen angegeben, wie sie im Pauschalierungsrechner 1 software- oder hardwaremäßig zu implementieren sind.

Der Neukunden-Pauschalpreis wird unter Zuhilfenahme verschiedener Parameter geschätzt. Diese Parameter können zum Beispiel sein:

a) Selbsteinschätzung des Kunden

b) Einschätzung durch Telekom aufgrund statistischer Daten aus anonymisierten Kundenprofilen

- Millieu-Zugehörigkeit

- Familienverhältnisse
- Beruf
- Hobby / Freizeitaktivitäten

c) Einschätzung durch Telekom aufgrund der beauftragten Dienstleistungen

- POTS
- ISDN

      Übertragungskanäle
      Anschlußart
      Anzahl Rufnummern

- Datendienste
- Online-Dienste
- Festverbindungen
- Mobilkommunikation
- Breitbandanschlüsse

d) Einschätzung durch Telekom aufgrund der angeschlossenen Kommunikationsgeräte

- analoge Telefone
- digitale Telefone
- Telefax-Gerät
- Nebenstellenanlage
- Datenendgeräte
- Computer
- Telematik-Geräte
- Anrufbeantworter

Aus diesen und eventuell weiteren Schätzparametern ergibt sich der Neukunden-Pauschalpreis zu:

$$Po = G1 * VSEK + G2 * VTstat + G3 * VTDLstg + G4 * VTKGer$$

mit

Gn(n = 1...4) =    Gewichungsfaktoren für die Schätzwerte
VSEK =    Verbrauch nach Selbsteinschätzung des Kunden
VTstat =    Verbrauch nach Einschätzung der Telekom (Kriterium b))
VTDLstg =    Verbrauch nach Einschätzung der Telekom (Kriterium c))
VTKGer =    Verbrauch nach Einschätzung der Telekom (Kriterium d))

| Gewichtungsfaktoren | |
|---|---|
| G1 = 0,1 | (Bewertung der Selbsteinschätzung) |
| G2 = 0,3 | (Bewertung der Millieu-Zugehörigkeit nach Kundenprofilen) |
| G3 = 0,3 | (Bewertung der erwarteten Nutzungen aufgrund der Beauftragung) |
| G4 = 0,3 | (Bewertung der erwarteten Nutzungen aufgrund der angeschlossenen Kommunikationsgeräte) |

Beispiele für weitere Pauschalpreisermittlungen:

Laufender Pauschalpreis für das Jahr J0:

$$PJO = \frac{PJ\text{-}1 + PJ\text{-}2 + PJ0}{3} + PTV\ddot{A}nd$$

mit

PTVÄnd =   pauschalisierter Veränderungsanteil, falls dieser zu berücksichtigen ist

Die Pauschalpreisneuberechnung sollte erfolgen, wenn die "Schulden-" oder "Guthabengrenze" PAGrO bzw. PAGrU in zwei aufeinander folgenden Bewertungszeiträumen (Monaten) überschritten werden:

PJONeu: (PAGrO(tn) + PAGrO(tn-1)) - 2PJ0 = < 0 (Schulden) oder
PJONeu: (PAGrU(tn) + PAGrU(tn-1)) - 2PJO = > 0 (Guthaben)

| mit | PAGrO = obere Alarmgrenze (Schuldengrenzbetrag) |
| --- | --- |
| und | PAGrU = untere Alarmgrenze (Guthabengrenzbetrag) |
| tn | aktueller Bewertungszeitraum |
| tn-1 | vergangener Bewertungszeitraum |

**Liste der Bezugszeichen**

| 1 | Pauschalierungsrechner |
| --- | --- |
| 2 | Leitung |
| 3 | Vermittlungsstelle |
| 4,5 | Verbindung, Leitung oder dergleichen |
| 6 | Leitung |
| 7 | Endgerät |
| 8 | Zähler |
| 9 | Display |
| 10 | Operatorterminal |
| 11 | Protokolldrucker |
| 12 | vergleichsschaltung |
| 13 | Prüfschaltung |
| 14 | Systemspeicher |
| 15 | Vergleichsschaltung |
| 16 | Rechenschaltung |
| 17 bis 26 | Leitung |
| VKT | Verwaltungsoptimierte Konmunikations-Tarifierung |

**Patentansprüche**

**1.** verfahren zur verwaltungsoptimierten Kommunikations-Tarifierung unter Verwendung von individuellen Kommunikationsprofilen, die aus gemessenen Parametern des Kommunikationsverhaltens abgeleitet werden, in digitalisierten oder analogen Kommunikationsnetzen, drahtgebunden, auf Funkbasis oder lasergestützt, terrestrisch oder über Satelliten realisiert, mit Endgeräten eines rufenden und eines gerufenen Teilnehmers, die über Vermittlungsstellen der Kommunikationsnetze physikalisch fest miteinander verbunden sind oder deren Übertragungskanal virtuell auf Paket- oder Zellenbasis realisiert wird, **dadurch gekennzeichnet,**
**daß** für einzelne Kunden oder Kundengruppen auf sämtlichen Verbindungen des Kommunikationsnetzes bestimmte Kommunikationsparameter zur Ermittlung des Kommunikationsverhaltens gemessen werden,
**daß** daraus individuell nutzerbezogene mittlere übertragene Informationsmengen pro Zeiteinheit abgeleitet werden,
**daß** in einem Pauschalierungsrechner (1) ein Pauschalierungsalgorithmus ausgeführt wird, wobei Monatsmittelwerte der übertragenen Informationsmengen aus gemessenen Tageswerten berechnet werden und daraus ein idealisierter Mittelwert als Fauschalwert für einen bestimmten größeren Zeitraum ermittelt wird,
**daß** ein aus einen individuellen Kommunikationsprofil abzuleitender prozentualer Betrag gebildet und dem idealisierten Mittelwert positiv und negativ zugeschlagen wird, wodurch Grenzwerte für die Schwankungsbreite des individuellen Kommunikationsverhaltens um den idealisierten Mittelwert - die Prozeßgrenzwerte (PGrO, PGrU) - festgelegt werden,

**daß** die Prozeßgrenzwerte (PGrO, PGrU) die Prozeßbreite angeben, die vom aktuellen Pauschalwert, ermittelt durch einen Pauschalierungsalgorithmus im Pauschalierungsrechner (1), abgedeckt wird,

**daß** ein aus dem individuellen Kommunikationsprofil abzuleitender weiterer prozentualer Betrag gebildet und den Prozeßgrenzwerten (PGrO, PGrU) zugeschlagen wird, wodurch die Prozeßalarmgrenzwerte (PAGrO, PAGrU) festgelegt werden, die anzeigen, daß bei dieser Überschreitung der Prozeßgrenzwerte (PGro, PGrU) der Pauschalwert +/- Prozeßbreite nicht mehr mit dem tatsächlichen Verbrauch pro Pauschalierungszeitraum in Übereinstimmung zu bringen ist,

**daß** der Pauschalierungsrechner (1) laufend die Überschreitungen der Prozeßgrenzwerte (PGrO, PGrU) auf der Basis der verwendeten Monatsmittelwerte oder aus den gemessenen, individuellen Parametern des Kommunikationsverhaltens abgeleiteten idealisierten Mittelwerte für einen größeren Zeitraum vergleicht und auf eventuelle Trendbildung überwacht,

**daß** der Pauschalierungsrechner (1) bei Überschreitung der Prozeßgrenzwerte (PGrO, PGrU) einen Indikatoralarm auslöst, der anzeigt, daß die zu erwartenden Abweichungen des tatsächlichen Verbrauchs im betrachteten Pauschalierungszeitraum die durch die Prozeßgrenzwerte festgelegte Bandbreite überschreiten werden,

**daß** der Pauschalierungsrechner (1) bei Überschreitung der Prozeßalarmgrenzwerte einen Prozeßalarm generiert, der anzeigt, daß bei dieser Überschreitung der Prozeßgrenzwerte und der Prozeßalarmgrenzen der tatsächliche Verbrauch im betrachteten Pauschalierungszeitraum nicht mehr mit dem pauschalierten Verbrauch dieses Zeitraumes in Einklang zu bringen ist,

**daß** der Pauschalierungsrechner (1) nach Auslösung eines Prozeßalarms angepaßte Pauschalierungsparameter berechnet und die Neufestlegung der Prozeßgrenzwerte auf der Basis dieser neuen Pauschalierungsparameter vorschlägt,

**daß** der Pauschalierungsrechner (1) bei trendmäßiger Überschreitung der Prozeßgrenzwerte (PGrO, PGrU) einen Indikatoralarm als Frühwarnsignal generiert, der anzeigt, daß bei dem aktuellen Trend die dauernden Abweichungen vom gültigen Pauschalwert einen auf der Basis der individuellen Kommunikationsparameter festgelegten Prozentsatz überschreiten,

**daß** der Pauschalierungsrechner (1) bei trendmäßiger Überschreitung der Prozeßgrenzwerte (PGrO, PGrU) neue Pauschalierungsparameter berechnet und zur Neufestsetzung der Prozeßgrenzwerte vorschlägt.

2. Verfahren nach dem Oberbegriff des Patentanspruches 1, **dadurch gekennzeichnet,**

**daß** fortlaufend gemessene Entgeltinformationen in Form von elektronisch verarbeitbaren Daten über Verbindungen oder Leitungen (4) einem Pauschalierungsrechner (1) zugeführt werden,

**daß** der Pauschalierungsrechner (1) aus diesen Daten zu einem bestimmten individuellen Termin einen neuen Pauschalpreis für das nächste kundenindividuelle Abrechnungsintervall ermittelt,

**daß** alle abrechnungsrelevanten Daten am Endgerät (7) des Kunden angezeigt werden,

**daß** einem jeden Endgerät (7) ein Kommunikationszähler (8) zugeordnet wird, mit den die übertragenen Informationsmengen gezählt werden (Grundeinheit Bit/s),

**daß** der Pauschalierungsrechner (1) die fehlerfrei übertragenen Informationsmengen als "verbrauchte Informationen" derart verarbeitet, daß er die aktuellen Verbrauchswerte mit den festgelegten Prozeßbreiten vergleicht und beim Überschreiten von festgelegten Prozeßgrenzwerten (PGrO, PGrU) Indikatoralarme generiert,

**daß** der Pauschalierungsrechner (1) die aktuellen Verbrauchswerte auf eventuelle Trendbildung überprüft und bei trendmäßiger Überschreitung der Prozeßgrenzwerte (PGrO, PGrU) Indikatoralarme generiert und angepaßte Pauschalierungsparameter berechnet,

**daß** der Pauschalierungsrechner (1) die aktuellen verbrauchswerte mit den festgelegten Prozeßbreiten vergleicht und beim Überschreiten von festgelegten Prozeßalarmgrenzen (PAGrO, PAGrU) Prozeßalarme generiert und angepaßte Pauschalierungsparameter berechnet,

**daß** der Pauschalierungsrechner (1) die Entgeltinformationen in einem Systemspeicher (14) speichert,

**daß** der Pauschalierungsrechner (1) die das Prozeßverhalten kennzeichnenden Parameter in einem Systemspeicher (14) speichert,

**daß** der Pauschalierungsrechner (1) die generierten Prozeß- und Indikatoralarme in einem Systemspeicher (14) speichert,

**daß** der Pauschalierungsrechner (1) die in Verbindung mit einem Alarm vorgeschlagenen aeuberechneten Paraineter in einem systemspeicher (14) speichert und

**daß** der Pauschalierungsrechner (1) zu einem vorbestimmten, kundeninciividuelien Zeitpunkt oder nach besonderer Notwendigkeit, zum Beispiel aufgrund eines Alarmes, einen neuen Pauschalwert berechnet, der dem veränderten Kommunikationsverhalten des jeweiligen Kunden angepaßt ist.

3. Verfahren nach einem der Patentansprüche 1 oder 2, **dadurch gekennzeichnet,**

**daß** die Indikatoralarme bei Überschreiten der Prozeßgrenzwerte (PGrO, PGrU) ausgelöst werden,

**daß** die Prozeßalarme bei Überschreiten der Prozeßalarmgrenzwerte (PAGrO, PAGrU) ausgelöst werden und

**daß** die Prozeßgrenzwerte (PGrO, PGrU) und die Prozeßalarmgrenzwerte (PAGrO, PAGrU) durch Setzen entsprechender Parameter flexibel gestaltet sind.

4. verfahren nach einem der Patentansprüche 1 oder 2, **dadurch gekennzeichnet,**

**daß** die individuellen Nutzungsdaten für einen Kunden bzw. für Kundengruppen im Systemspeicher (14) des Pauschalierungsrechners (1) gespeichert werden und als Basis für den tumusgemäßen Feinabgleich und zur Festsetzung der langfristigen Pauschalwerte dienen,

**daß** die aus den pauschalierten mittleren Verbrauchswerten und sonstigen entgeltrelevanten Nutzungsdaten resultierenden Pauschalpreise den Kunden in individuell festgelegten Zeiträumen automatisch in Rechnung gestellt werden und

**daß** die sich aus dem Feinabgleich ergebenden Differenzbeträge automatisch direkt auf den Kundenkonten verrechnet werden.

5. verfahren nach einem der Patentansprüche 1 oder 2, **dadurch gekennzeichnet,**

**daß** Neukunden mit ihren Kundendaten einer bestimmten Nutzerklasse zugeordnet werden,

**daß** zur Verifikation der Anfangspauschalierung für einen bestimmten Einschwingzeitraum ein Feinabgleich, zum Beispiel alle drei Monate, durchgeführt wird und

**daß** ein sich ergebender Differenzbetrag zum exakten Wert des Nutzungsentgeltes, der innerhalb eines festgesetzten Zielsektors von +/- X % vom Wert des pauschalierten Entgeltes liegt, in den Pauschalierungsalgorithmus des Pauschalierungsrechners (1) eingeht und die Pauschalwerte langfristig mit Hilfe des Pauschalierungsrechners (1) festlegt.

6. Schaltungsanordnung zur verwaltungsoptimierten Kommunikations-Tarifierung unter Verwendung von individuellen Kommunikationsprofilen, die aus gemessenen Parametern des individuellen Kommunikationsverhaltens abgeleitet werden, **dadurch gekennzeichnet,**

**daß** eine Vermittlungsstelle (3) mit Endgeräten (7) eines Kommunikationsnetzes und über Verbindungen, Leitungen (4 und 5) oder Übertragungsmittel mit einem Pauschalierungsrechner (1) mit Pauschalierungsalgorithmus zur Berechnung der Pauschalwerte für einen größeren Zeitraum, wie Quartal oder Jahr, derart verbunden ist,

**daß** aus dem individuellen Kommunikationsprofil ein prozentualer Betrag abgeleitet wird, der Prozeßgrenzwerten (PGrO, PGrU) zugeschlagen wird, wodurch Prozeßalarmgrenzwerte (PAGrO, PAGrU) gebildet werden,

**daß** bei Überschreitung der Prozeßalarmgrenzwerte ein Prozeßalarm ausgelöst wird, der anzeigt, daß bei dieser Abweichung von einem idealisierten Mittelwert das pauschalierte Nutzungsentgelt nicht mehr mit dem tatsächlichen Jahresverbrauch in Einklang zu bringen ist,

**daß** die Prozeßgrenzwerte (PGrO, PGrU) die Prozeßbreite angeben, die vom pauschalierten Entgelt unter Einhaltung einer beim Feinabgleich am Ende des Pauschalierungszeitraumes vom Pauschalierungsrechner (1) ermittelten Differenz zum exakten Verbrauch von +/- X % vom pauschalierten Entgelt abgedeckt wird,

**daß** der Pauschalierungsrechner (1) laufend auf der Basis der verwendeten Monatsmittelwerte oder der aus den gemessenen, individuellen Parametern des Kommunikationsverhaltens abgeleiteten idealisierten Mittelwerten für einen größeren Zeitraum vergleicht, ob die vorhandenen Abweichungen sich in der festgelegten Prozeßbreite bewegen,

**daß** der Pauschalierungsrechner (1) laufend die Überschreitungen der Prozeßgrenzwerte (PGrO, PGrU) auf der Basis der verwendeten Monatsmittelwerte oder aus den gemessenen, individuellen Parametern des Kommunikationsverhaltens abgeleiteten idealisierten Mittelwerte für einen größeren Zeitraum vergleicht und auf eventuelle Trendbildung überwacht,

**daß** der Pauschalierungsrechner (1) einen Indikatoralarm auslöst, der anzeigt, daß bei dem festgestellten aktuellen Trend die sich daraus beim Feinabgleich ergebende Differenz zum pauschalierten Entgelt um mehr als einen festgelegten Prozentwert abweicht,

**daß** der Pauschalierungsrechner (1) bei festgestellter trendmäßiger Überschreitung der Prozeßgrenzwerte (PGrO, PGrU) automatisch neue, angepaßte Prozeßparameter und damit ein neues pauschaliertes Entgelt berechnet und zur Einführung vorschlägt,

**daß** jedes Endgerät (7) mit einem Kommunikationszähler (8) ausgerüstet ist oder über Leitungen (6) bzw. andere Übertragungsmittel mit einem entfernt angeordneten Kommunikationszähler (8) in Verbindung steht, dessen Ablesung entweder automatisch mit Telemetriemitteln oder nach Aufforderung, zum Beispiel mittels Döppelkarte, vom Kunden erfolgt.

7. Schaltungsanordnung nach Patentanspruch 6, **dadurch gekennzeichnet**e,

daß der Kommunikationszähler (8) als verplombter oder in anderer Weise gegen Manipulation geschützter Shannon-zähler ausgebildet ist, der auf der Basis von übertragenen Informationen in der Grundeinheit Bit/s die verbrauchte Information in der abgeleiteten Größe von zum Beispiel Shannon-Stunden (SHh) zählt und

daß jedes Endgerät (7) ein Display (9) zur Anzeige der Ist-, Soll- und Pauschbeträge aufweist.

**8.** Schaltungsanordnung nach einem der Patentansprüche 6 oder 7, **dadurch gekennzeichnet,**

**daß** der Pauschalierungsrechner (1) über Verbindungen, Leitungen (4) oder andere Übertragungsmittel Entgertinformationen empfängt, die über interne Leitungen (18) dem Systemspeicher (14) und einer ersten Vergleichsschaltung (12) zum Vergleich mit einer definierten Prozeßbreite zugeführt werden,

**daß** der Pausclialierungsrechner (1) die Nutzungsentgelte, zum Beispiel pauschalierte und exakte Werte, in der Größenordnung von einer Währung/SHh berechnet,

**daß** der Ausgang der ersten Vergleichsschaltung (12) über eine Leitung (20) mit einer prüfschaltung (13) zur Prüfung der Trendbildung verbunden ist,

**daß** der Ausgang der Prüfschaltung zur Trendprüfung über eine Leitung (21) mit dem Systemspeicher (14) verbunden ist,

**daß** der Systemspeicher (14) über Leitungen (22) mit einer zweiten Vergleichsschaltung (15) zum Vergleich des Istbetrages zum Pauschalbetrag minus Sollbetrag verbunden ist,

**daß** der Ausgang dieser zweiten Vergleichsschaltung (15) über Leitungen (23) mit einer Rechenschaltung (16) zur Berechnung des neuen Pauschalpreises verbunden ist und

**daß** der Ausgang dieser Rechenschaltung über Leitungen (5) mit der zugeordneten Vermittlungsstelle (3) verbunden ist und über Leitungen (24) mit einem Operatorterminal (10), das seinerseits außerdem mit der ersten Vergleichsschaltung (12) und der Prüfschaltung (13) über Leitungen (26 bzw. 25) für den Prozeßalarm bzw. den Indikatoralarm verbunden ist sowie über eine weitere Leitung (19) mit dem Pauschalierungsrechner (1) zur Parametereinstellung verbunden ist.

**9.** Schaltungsanordnung nach Patentanspruch 7, **dadurch gekennzeichnet,**

**daß** das operatorterminal (10) mit einem Protokolldrucker (11) verbunden ist.

**10.** schaltungsanordnung nach einem der Patentansprüche 6 bis 8, **dadurch gekennzeichnet,**

**daß** die Systemkontrolle halbautomatisch bedienergesteuert, jedoch systeniunterstützt oder vollautomatisch systemgesteuert ausgeführt ist.

**Claims**

**1.** Method for administration-optimized communications metering using individual communications profiles derived from measured parameters of the communications behavior, in digitized or analog communications networks, implemented as wired, radio-based, or laser-supported systems, either terrestrial or satellite-based, having terminal devices of a calling subscriber and a called subscriber that are permanently connected to one another physically through exchanges of the communications network or whose transmission channels are implemented virtually on a packet basis or cell basis, **characterized in that**

certain communications parameters are measured to determine the communications behavior for individual customers or customer groups on all connections of the communications network,

**in that** individual, user-specific average transmitted quantities of information per unit time are derived therefrom,

**in that**, in a flat rate calculating computer (1), a flat rate calculation algorithm is executed in which average monthly values of the quantities of information transmitted are calculated from measured daily values and an idealized average value is determined therefrom as a flat rate value for a certain longer time period,

**in that** a percentage amount to be derived from an individual communications profile is calculated and added to and subtracted from the idealized average value to define limit values for the range of variation of the individual communications behavior about the idealized average value - the process limit values (PGrO, PGrU) -,

**in that** the process limit values (PGrO, PGrU) specify the process width that is covered by the current flat rate value determined by a flat rate calculation algorithm in the flat rate calculating computer (1),

**in that** an additional percentage amount to be derived from the individual communication profile is calculated and added to the process limit values (PGrO, PGrU), by which means the process alarm limit values (PAGrO, PAGrU) are defined, said values indicating that in the event of this exceedance of the process limit values (PGrO, PGrU) the flat rate value +/- process width can no longer be brought into agreement with the actual use per flat rate calculation period,

**in that** the flat rate calculating computer (1) continuously compares the exceedances of the process limit values (PGrO, PGrU) on the basis of the monthly average values used or from the idealized average values derived from the measured individual parameters of the communications behavior over a longer time period and monitors them for possible trending,

**in that**, when the process limit values (PGrO, PGrU) are exceeded, the flat rate calculating computer (1) triggers an indicator alarm that indicates that the expected deviations in actual use will exceed the bandwidth defined by the process limit values in the flat rate calculation period under consideration,

**in that**, when the process alarm limit values are exceeded, the flat rate calculating computer (1) generates a process alarm that indicates that with this exceedance of the process limit values and process alarm limit values, the actual use in the flat rate calculation period under consideration can no longer be brought into agreement with the calculated flat rate use for this time period,

**in that**, after triggering a process alarm, the flat rate calculating computer (1) calculates adjusted flat rate calculation parameters and proposes the resetting of the process limit values on the basis of these new flat rate calculation parameters,

**in that**, in the event that exceedance of the process limit values (PGrO, PGrU) constitutes a trend, the flat rate calculating computer (1) generates an indicator alarm as an early warning signal that indicates that according to the current trend the ongoing deviations from the applicable flat rate value exceed a percentage established on the basis of the individual communications parameters,

**in that** in the event that exceedance of the process limit values (PGrO, PGrU) constitutes a trend, the flat rate calculating computer (1) calculates new flat rate calculation parameters and proposes the resetting of the process limit values.

2. Method according to the preamble of claim 1, **characterized in that**
continuously measured payment information in the form of electronically processable data is supplied to a flat rate calculating computer (1) through connections or lines (4),

**in that** the flat rate calculating computer (1) calculates a new flat rate price from these data at a certain individual appointed time for the next customer-specific billing interval,

**in that** all billing-related data are displayed on the customer's terminal device (7),

**in that** a communication meter (8) that counts the transmitted quantities of information (basic unit: bits/s) is associated with each terminal device (7),

**in that** the flat rate calculating computer (1) processes the quantities of information transmitted error-free as "information used" in such a manner that said computer compares current usage amounts to the defined process widths, and generates indicator alarms in the event of exceedance of the established process limit values (PGrO, PGrU),

**in that** the flat rate calculating computer (1) monitors the current usage amounts for possible trending and, in the event that exceedance of the process limit values (PGrO, PGrU) constitutes a trend, the flat rate calculating computer (1) generates indicator alarms and calculates adjusted flat rate calculation parameters,

**in that** the flat rate calculating computer (1) compares current usage amounts to the defined process widths, and, in the event that process alarm limit values (PAGrO, PAGrU) are exceeded, generates process alarms and calculates adjusted flat rate calculation parameters,

**in that** the flat rate calculating computer (1) stores the payment information in a system memory (14),

**in that** the flat rate calculating computer (1) stores the generated process alarms and indicator alarms in a system memory (14),

**in that** the flat rate calculating computer (1) stores the parameters characterizing the process behavior in a system memory (14),

**in that** the flat rate calculating computer (1) stores the newly calculated parameters proposed in connection with an alarm in a system memory (14), and

**in that** the flat rate calculating computer (1) calculates a new flat rate value at a predetermined, customer-specific point in time or by special necessity, for example on account of an alarm, which new value is adjusted to the changed communications behavior of the customer in question.

3. Method according to one of claims 1 or 2, **characterized in that**
the indicator alarms are triggered when the process limit values (PGrO, PGrU) are exceeded,

**in that** the process alarms are triggered when the process alarm limit values (PAGrO, PAGrU) are exceeded,

**in that** the process limit values (PGrO, PGrU) and the process alarm limit values (PAGrO, PAGrU) are flexibly structured by the setting of appropriate parameters.

4. Method according to one of claims 1 or 2, **characterized in that**
the individual usage data for a customer or for customer groups are stored in the system memory (14) of the flat rate calculating computer (1) and serve as a basis for regular fine adjustment and for establishment of the long-term flat rate values,

**in that** the flat rate prices resulting from the calculated average flat rate usage values and other payment-related usage data are automatically invoiced to the customers at individually defined time intervals, and

**in that** the differential amounts resulting from the fine adjustment are automatically billed directly to the customer accounts.

5. Method according to one of claims 1 or 2, **characterized in that**
new customers and their customer data are automatically allocated to a specific user class,

**in that**, for a certain build-up period a fine adjustment is carried out, for example every third month, to verify the initial flat rate calculation, and

**in that** a resultant differential amount relative to the exact value of the usage charge, which lies within a specified target range of +/- X% of the value of the flat rate calculated charge, enters into the flat rate calculation algorithm of the flat rate calculating computer (1) and determines the flat rate values in the long term by means of the flat rate calculating computer (1).

6. Circuit arrangement for administration-optimized communications metering using individual communications profiles derived from measured parameters of the communications behavior, **characterized in that**
an exchange (3) is connected in such a manner to terminal devices (7) of a communications network and by connections, lines (4 and 5) or transmission means to a flat rate calculating computer (1) having a flat rate calculation algorithm for calculating the flat rate values for a longer period of time such as a quarter or year that a percentage amount is derived from the individual communications profile and added to the process limit values (PGrO, PGrU), by which means process alarm limit values (PAGrO, PAGrU) are defined,

that, when the process alarm limit values are exceeded, a process alarm is triggered that indicates that with this deviation from an idealized average value, the calculated flat rate usage charge can no longer be brought into agreement with the actual annual consumption,

that the process limit values (PGrO, PGrU) specify the process width that the calculated flat rate charge covers while maintaining a difference relative to the exact consumption of +/- X% of the calculated flat rate charge determined by the flat rate calculating computer (1) during the fine adjustment at the end of the flat rate calculation period,

that the flat rate calculating computer (1) continuously compares, on the basis of the monthly average values used or from the idealized average values derived from the measured individual parameters of the communications behavior over a longer time period, whether the existing deviations are staying within the established process width,

that the flat rate calculating computer (1) continuously compares the exceedances of the process limit values (PGrO, PGrU) on the basis of the monthly average values used or from the idealized average values derived from the measured individual parameters of the communications behavior over a longer time period and monitors them for possible trending,

that the flat rate calculating computer (1) triggers an indicator alarm that indicates that according to the current trend determined, the resulting difference in the fine adjustment deviates from the calculated flat rate charge by more than an established percentage amount,

that, in the event that a trend of exceedance of the process limit values (PGrO, PGrU) is determined, the flat rate calculating computer (1) automatically calculates new, adjusted process parameters, and thus calculates a new calculated flat rate charge and proposes its introduction,

that each terminal device (7) is equipped with a communication meter (8) or is connected through lines (6) or other transmission means to a remotely located communication meter (8), which meter is read either automatically with telemetry means or on demand, for example by means of a dual card, by the customer.

7. Circuit arrangement according to claim 6, **characterized in that**
the communication meter (8) is embodied as a Shannon counter that is sealed or otherwise protected against tampering, that counts the information used in the derived quantity of, for example, Shannon hours (SHh) on the basis of transmitted information in the basic unit bits/s, and

**in that** each terminal device (7) has a display (9) for displaying the actual, reference, and flat rate amounts.

8. Circuit arrangement according to one of claims 6 or 7, **characterized in that**
the flat rate calculating computer (1) receives payment information over connections, lines (4) or other transmission means, which information is sent over internal lines (18) to the system memory (14) and a first comparator circuit (12) for comparison to a defined process width,

**in that** the flat rate calculating computer (1) calculates the usage charges, for example flat rate and exact values, on the order of magnitude of a currency/SHh,

**in that** the output of the first comparator circuit (12) is connected by a line (20) to a test circuit (13) for testing the trending,

**in that** the output of the test circuit for trend testing is connected by a line (21) to the system memory (14),

**in that** the system memory (14) is connected by lines (22) to a second comparator circuit (15) for comparing the actual amount to the flat rate amount minus the reference amount,

**in that** the output of this second comparator circuit (15) is connected by lines (23) to an arithmetic circuit (16) for computing the new flat rate price, and

**in that** the output of this arithmetic circuit is connected by lines (5) to the associated exchange (3) and is connected by lines (24) to an operator terminal (10), which terminal in turn is also connected to the first comparator circuit (12) and the test circuit (13) by lines (26 and 25, respectively) for the process alarm or the indicator alarm, and additionally by another line (19) to the flat rate calculation computer (1) for parameter setting.

9. Circuit arrangement according to claim 7, **characterized in that**
the operator terminal (10) is connected to a record printer (11).

10. Circuit arrangement according to one of claims 6 through 8, **characterized in that**
system monitoring is performed semi-automatically under operator control but with system support, or fully automatically under system control.


**Revendications**

1. Procédé destiné à la tarification de communication optimisée en maintenance et utilisant des profils de communication individuels, qui sont déduits des paramètres mesurés du comportement de communication, dans les réseaux de communication numérisés ou analogiques, câblés, sur base radio ou assistés par laser, réalisés par voie terrestre ou par satellites, à l'aide des postes terminaux d'un abonné appelant et d'un abonné appelé étant reliés entre eux en circuit permanent par les centrales téléphoniques des réseaux de communication ou dont le canal de transmission est réalisé virtuellement sur base de transmission par paquets ou par cellules, **caractérisé**

**en ce que** des paramètres de communication définis destinés à détecter le comportement de communication sont mesurés sur l'ensemble des communications du réseau de communication pour des clients individuels ou des groupes de clients,

**en ce qu'**on en déduit des quantités moyennes d'informations transmises par unité de temps et se référant de manière individuelle à l'usager,

**en ce qu'**un algorithme de forfaitisation s'établit dans un ordinateur de forfaitisation (1), les valeurs mensuelles moyennes des quantités d'informations transmises étant calculées à partir des valeurs journalières mesurées et une valeur moyenne idéalisée étant déterminée desdites mesures comme valeur forfaitaire pour une période prolongée définie,

**en ce qu'**un montant en pourcents à déduire d'un profil de communication individuel est constitué et affecté positivement et négativement à la valeur moyenne idéalisée, moyen par lequel sont définies des valeurs limites - les valeurs limites du processus (PGrO, PGrU) - autour de la valeur moyenne idéalisée et destinées à la largeur d'oscillation du comportement de communication individuel,

**en ce que** les valeurs limites du processus (PGrO, PGrU) indiquent la largeur de processus couverte par la valeur forfaitaire actuelle déterminée par un algorithme de forfaitisation dans l'ordinateur de forfaitisation (1),

**en ce qu'**un autre montant en pourcents à déduire du profil de communication individuel est constitué et affecté aux valeurs limites du processus (PGrO, PGrU), moyen par lequel sont définies les valeurs limites d'alarme de processus (PAGrO, PAGrU) qui indiquent que, dans le cas de ce dépassement des valeurs limites du processus (PGrO, PGrU), on ne peut plus mettre la valeur forfaitaire +/- la largeur de processus en concordance avec la consommation effective par période de forfaitisation,

**en ce que** l'ordinateur de forfaitisation (1) compare continuellement les dépassements des valeurs limites du processus (PGrO, PGrU) sur la base des valeurs mensuelles moyennes utilisées ou des valeurs moyennes idéalisées déduites à partir des paramètres individuels mesurés du comportement de communication pour une période prolongée et surveille la formation d'une tendance éventuelle,

**en ce que** l'ordinateur de forfaitisation (1) déclenche une alarme indicatrice en cas de dépassement des valeurs limites du processus (PGrO, PGrU), qui indique que les déviations à attendre de la consommation effective dépasseront la largeur de bande définie par les valeurs limites du processus dans la période de forfaitisation observée,

**en ce que** l'ordinateur de forfaitisation (1) génère une alarme de processus en cas de dépassement des valeurs limites d'alarme de processus, qui indique que, dans le cas de ce dépassement des valeurs limites du processus et des valeurs limites d'alarme de processus, on ne peut plus mettre la consommation effective dans la période de forfaitisation observée en concordance avec la consommation forfaitaire de cette période,

**en ce que** l'ordinateur de forfaitisation (1) calcule des paramètres de forfaitisation adaptés après déclenchement d'une alarme de processus et propose la nouvelle définition des valeurs limites du processus sur la base de ces nouveaux paramètres de forfaitisation,

**en ce que** l'ordinateur de forfaitisation (1) génère une alarme indicatrice servant de signal d'alarme précoce en cas de dépassement tendanciel des valeurs limites du processus (PGrO, PGrU), qui indique que, dans le cas de la tendance actuelle, les déviations continuelles de la valeur forfaitaire actuelle dépassent un pourcentage défini sur la base des paramètres de communication individuels,

**en ce que** l'ordinateur de forfaitisation (1) calcule de nouveaux paramètres de forfaitisation en cas de dépassement tendanciel des valeurs limites du processus (PGrO, PGrU) et les propose en vue de la nouvelle détermination des valeurs limites du processus.

2. Procédé selon le préambule de la revendication 1, **caractérisé**

**en ce que** les informations tarifaires sous forme de données à traiter électroniquement et mesurées constamment alimentent un ordinateur de forfaitisation (1) par des liaisons ou des lignes (4),

**en ce que** l'ordinateur de forfaitisation (1) calcule un nouveau prix forfaitaire à partir de ces données, destiné à l'intervalle suivant de la facturation personnalisée du client à une date individuelle définie,

**en ce que** toutes les données pertinentes pour la facturation s'affichent sur le poste terminal (7) du client,

**en ce que** chaque poste terminal (7) est affecté à un compteur de communication (8), à l'aide duquel les quantités d'informations transmises sont décomptées (unités de base : Bit/s),

**en ce que** l'ordinateur de forfaitisation (1) traite comme « informations consommées » les quantités d'informations transmises sans erreur de sorte qu'il compare les valeurs de consommation actuelles avec les largeurs définies du processus et génère des alarmes indicatrices en cas de dépassement des valeurs limites définies du processus (PGrO, PGrU)

**en ce que** l'ordinateur de forfaitisation (1) contrôle la formation d'une tendance éventuelle dans les valeurs de consommation actuelles, qu'il génère des alarmes indicatrices en cas de dépassement tendanciel des valeurs limites du processus (PGrO, PGrU) et calcule des paramètres de forfaitisation adaptés,

**en ce que** l'ordinateur de forfaitisation (1) compare les valeurs de consommation actuelles avec les largeurs définies du processus, qu'il génère des alarmes de processus en cas de dépassement des limites d'alarmes de processus définies (PAGrO, PAGrU) et calcule des paramètres de forfaitisation adaptés,

**en ce que** l'ordinateur de forfaitisation (1) enregistre les informations tarifaires dans une mémoire de système (14),

**en ce que** l'ordinateur de forfaitisation (1) enregistre les paramètres caractérisant le comportement de processus dans une mémoire de système (14),

**en ce que** l'ordinateur de forfaitisation (1) enregistre les alarmes indicatrices et celles de processus générées dans une mémoire de système (14),

**en ce que** l'ordinateur de forfaitisation (1) enregistre dans une mémoire de système (14) les paramètres nouvellement calculés et proposés en relation avec une alarme, et

**en ce que** l'ordinateur de forfaitisation (1) calcule une nouvelle valeur forfaitaire qui est adaptée au comportement de communication modifié du client respectif, à un moment prédéfini et propre au client ou selon une nécessité particulière, par exemple en raison d'une alarme.

3. Procédé selon l'une des revendications 1 ou 2, **caractérisé**

**en ce que** les alarmes indicatrices se déclenchent en cas de dépassement des valeurs limites du processus (PGrO, PGrU),

**en ce que** les alarmes de processus se déclenchent en cas de dépassement des valeurs limites d'alarme de processus (PAGrO, PAGrU), et

**en ce que** les valeurs limites du processus (PGrO, PGrU) et les valeurs limites d'alarme de processus (PAGrO, PAGrU) s'aménagent de manière flexible en réglant les paramètres correspondants.

4. Procédé selon l'une des revendications 1 ou 2, **caractérisé**

**en ce que** les données d'utilisation individuelles destinées à un client ou à des groupes de clients sont enregistrées dans la mémoire de système (14) de l'ordinateur de forfaitisation (1) et servent de base à l'alignement précis périodique et à la détermination de valeurs forfaitaires à long terme,

**en ce que** les prix forfaitaires résultant des valeurs de consommation moyennes forfaitisées et de diverses données d'utilisation pertinentes pour la rémunération sont facturés automatiquement aux clients par périodes définies individuellement, et

**en ce que** les montants de différences obtenus à partir de l'alignement précis sont soldés automatiquement directement sur les comptes des clients.

5. Procédé selon l'une des revendications 1 ou 2, **caractérisé**
**en ce que** les nouveaux clients sont affectés dans une classe d'abonnés définie à l'aide de leurs données de clientèle,
**en ce qu'**un alignement précis est exécuté afin de vérifier la forfaitisation initiale sur une période transitoire définie, par exemple tous les trois mois, et
**en ce qu'**un montant de différence donné, par rapport à la valeur exacte de la redevance d'utilisation se trouvant au sein d'un secteur visé déterminé de +/- X % de la valeur de la rémunération forfaitisée, entre dans l'algorithme de forfaitisation de l'ordinateur de forfaitisation (1) et définit à long terme les valeurs forfaitaires à l'aide de l'ordinateur de forfaitisation (1).

6. Disposition de circuits destinée à la tarification de communication optimisée en maintenance et utilisant des profils de communication individuels, qui sont déduits des paramètres mesurés du comportement de communication individuel, **caractérisée**
**en ce qu'**une centrale téléphonique (3) est reliée de telle manière aux postes terminaux (7) d'un réseau de communication ou par des liaisons, des lignes (4 et 5) ou des moyens de transmission à un ordinateur de forfaitisation (1) à algorithme de forfaitisation destiné au calcul des valeurs forfaitaires pour une période prolongée, par exemple un trimestre ou une année,
**en ce qu'**un montant en pourcents est déduit du profil de communication individuel et affecté à des valeurs limites du processus (PGrO, PGrU), moyen par lequel sont constituées des valeurs limites d'alarme de processus (PAGrO, PAGrU),
**en ce qu'**une alarme de processus se déclenche en cas de dépassement des valeurs limites d'alarme de processus, qui indique que dans le cas de cette déviation d'une valeur moyenne idéalisée, on ne peut plus mettre la redevance d'utilisation forfaitisée en concordance avec la consommation annuelle effective,
**en ce que** les valeurs limites du processus (PGrO, PGrU) indiquent la largeur de processus couverte par la redevance forfaitisée en respectant une différence définie par l'ordinateur de forfaitisation (1) lors de l'alignement précis à la fin de la période de forfaitisation et établie par rapport à la consommation exacte de +/- X % de la rémunération forfaitisée,
**en ce que** l'ordinateur de forfaitisation (1) compare constamment, pour une période prolongée, sur la base des valeurs moyennes mensuelles utilisées ou sur celle des valeurs moyennes idéalisées déduites des paramètres individuels mesurés du comportement de communication, si les déviations existantes se déplacent dans la largeur de processus déterminée,
**en ce que** l'ordinateur de forfaitisation (1) compare constamment les dépassements des valeurs limites du processus (PGrO, PGrU), pour une période prolongée, sur la base des valeurs moyennes mensuelles utilisées ou sur celle des valeurs moyennes idéalisées déduites des paramètres individuels mesurés du comportement de communication, et surveille l'établissement d'une tendance éventuelle,
**en ce que** l'ordinateur de forfaitisation (1) déclenche une alarme indicatrice qui indique que, dans le cas de la tendance actuelle constatée, la différence en résultant lors de l'alignement précis et établie par rapport à la rémunération forfaitisée dévie d'une valeur supérieure au pourcentage défini,
**en ce que** l'ordinateur de forfaitisation (1), en cas de dépassement tendanciel constaté des valeurs limites du processus (PGrO, PGrU), calcule automatiquement de nouveaux paramètres de processus adaptés et par conséquent une nouvelle redevance forfaitisée, et propose d'établir ceux-ci,
**en ce que** chaque poste terminal (7) est équipé d'un compteur de communication (8) ou se trouve relié par des lignes (6) ou d'autres moyens de transmission à un compteur de communication (8) installé à distance, dont le relevé s'effectue soit automatiquement avec des moyens de télémétrie, soit sur demande du client, par exemple à l'aide de la carte double.

7. Disposition de circuits selon la revendication 6, **caractérisée**
**en ce que** le compteur de communication (8) est présenté sous la forme d'un compteur à shannons plombé ou protégé autrement contre toute manipulation, ledit compteur comptant l'information consommée sur la base d'informations transmises en unité de base - Bit/s - dans la taille déduite, par exemple d'heures-shannons (SHh) et
**en ce que** chaque poste terminal (7) comporte un écran (9) destiné à l'affichage des montants réels, nominaux et forfaitaires.

8. Disposition de circuits selon l'une des revendications 6 ou 7, **caractérisée**
**en ce que** l'ordinateur de forfaitisation (1) reçoit des informations tarifaires par des liaisons, des lignes (4) ou d'autres moyens de transmission, lesdites informations étant transmises à la mémoire de système (14) et à un premier circuit comparateur (12) par des lignes internes (18), afin d'être comparées avec une largeur de processus définie,

**en ce que** l'ordinateur de forfaitisation (1) calcule les redevances d'utilisation, par exemple les valeurs forfaitisées et celles exactes, dans l'ordre de grandeur d'une monnaie/SHh,

**en ce que** la sortie du premier circuit comparateur (12) est reliée par une ligne (20) à un circuit de contrôle (13) destiné à contrôler la formation de tendances,

**en ce que** la sortie du circuit de contrôle destiné au contrôle des tendances est reliée par une ligne (21) à la mémoire de système (14),

**en ce que** la mémoire de système (14) est reliée par des lignes (22) à un deuxième circuit comparateur (15) destiné à comparer le montant réel par rapport au montant forfaitaire moins le montant nominal,

**en ce que** la sortie de ce deuxième circuit comparateur (15) est reliée par des lignes (23) à un circuit de traitement des données (16) destiné à calculer le nouveau prix forfaitaire, et

**en ce que** la sortie de ce circuit de traitement des données est reliée par des lignes (5) à la centrale téléphonique (3) affectée et par des lignes (24) à un terminal d'opérateur (10), lui-même relié en outre par des lignes (26 ou 25) au premier circuit comparateur (12) et au circuit de contrôle (13) pour l'alarme de processus ou l'alarme indicatrice, ladite sortie étant également reliée par une autre conduite (19) à l'ordinateur de forfaitisation (1) destiné au réglage des paramètres.

9. Disposition de circuits selon la revendication 7, **caractérisée**
   **en ce que** le terminal d'opérateur (10) est relié à une imprimante de protocole (11).

10. Disposition de circuits selon l'une des revendications 6 à 8, **caractérisée**
    **en ce que** le contrôle du système s'effectue en mode semi-automatique commandé par l'usager, toutefois assisté par le système, ou en mode entièrement automatique commandé par le système.

FIG. 1

FIG. 2

FIG. 3

FIG. 4

FIG. 5

FIG. 6

FIG. 7

FIG. 8